# FASCICULE DE BREVET EUROPEEN

(11) **EP 1 063 111 B1**
(45) Date de publication et mention de la délivrance du brevet: **02.02.2005**
(21) Numéro de dépôt: 00107472.3
(22) Date de dépôt: 28.11.1996
(51) Int. Cl.: B60J 1/16

(54) **Dispositif de fermeture d'une bale de véhicule automobile, à panneau coulissant**
Vorrichtung zum Schliessen einer Fahrzeugöffnung, mit Schiebefenster
Closing device for a vehicle opening, with a sliding pane

(30) Priorité: 08.12.1995 FR 9514566
(43) Date de publication de la demande: 27.12.2000
(62) Demande divisionnaire de: 96402573.8
(73) Titulaire: WAGON SAS, 79300 Bressuire (FR)
(72) Inventeur: Neaux, Jean-Claude M., 79302 Bressuire (FR)
(74) Mandataire: Vidon, Patrice

(56) Documents cités:
- EP-A- 0 037 097
- EP-A- 0 449 372
- EP-A- 0 646 483
- BE-A- 358 158
- DE-A- 3 118 559
- FR-A- 2 552 483
- US-A- 1 809 132
- US-A- 2 282 980

## Description

La présente invention concerne un dispositif de fermeture affleurant d'une baie de carrosserie.

Le moyen le plus connu de rapporter une glace sur la baie d'un véhicule tel qu'une automobile, un autobus, un camion ou même un wagon de chemin de fer, consiste à prévoir un cadre de liaison de la glace aux bords de la baie qui est en deux parties interne et externe rapprochées l'une de l'autre pour pincer simultanément les bords de la glace et de l'ouverture avec une garniture d'étanchéité.

Le document BE-A-358 158 présente une technique particulière, selon laquelle un panneau mobile est monté coulissant par rapport à deux traverses. Ces deux traverses viennent chevaucher les bords de l'ouverture dans le panneau fixe, et le panneau mobile est toujours dans un plan parallèle et distinct du plan défini par le panneau fixe.

Dans le domaine distinct des portières de véhicule, on connaît également le document EP-A-0 106 149. Ce document décrit une baie affleurante, montée sur un cadre. Une ouverture est ménagée dans un angle de la baie. Le cadre est nécessaire, pour maintenir la vitre.

Les critères d'ordre esthétique ayant évolués, la tendance est actuellement de chercher à supprimer sinon la présence du moins l'impression visuelle de rupture que constitue un cadre de manière que la glace soit perçue comme une portion transparente de la carrosserie sans solution de continuité avec elle.

Par la présente invention, on propose une solution permettant de fermer une baie de véhicule par un panneau affleurant pourvu d'une partie mobile pour assurer ne fonction d'aération.

A cet effet l'invention a pour objet un dispositif de fermeture d'une baie pratiquée dans la carrosserie d'un véhicule selon la revendication 1.

Le dispositif d'obturation de la baie ne possède donc aucun cadre extérieur qui fasse saillie par rapport à la carrosserie, contrairement à ce qui est le cas aujourd'hui pour des dispositifs qui comportent des panneaux en deux parties c'est-à-dire des vitres dont une partie est mobile par rapport à une partie fixe pour assurer la ventilation ou l'aération d'une cabine ou d'un habitacle de véhicule.

L'un des modes de fixation des éléments fonctionnels sur la face interne du panneau fixe sera le collage. On peut également mettre en oeuvre des moyens de fixation traversants dont la partie située à l'extérieur du panneau peut être recouverte d'un cache relativement aplati.

Dans une variante de réalisation plus économique, le panneau fixe peut être reconstitué à partir de plusieurs pièces autour d'un évidement, les zones de jonction de ces pièces étant masquées par des profils affleurant de liaison et par des motifs par exemple sérigraphiés sur ces pièces. Les éléments fonctionnels peuvent également coopérer à l'assemblage des pièces constitutives du panneau fixe.

Dans un second mode de réalisation, le panneau fixe est simplement rapporté par collage sur les bords renfoncés de la baie de carrosserie.

Dans ce cas notamment, si les éléments fonctionnels comportent au moins une traverse, celle-ci s'étend jusqu'aux bords du panneau de sorte que les extrémités de la traverse sont prises en sandwich entre le panneau et les bords de la baie. Cette disposition permet de répondre à certaines exigences normatives relatives au bris de glace sur les véhicules.

Le panneau mobile qui constitue l'élément permettant l'aération souhaitée, est coulissant.

Dans le cas d'un panneau d'aération coulissant, les éléments fonctionnels comportent deux traverses parallèles de support de rails de guidage pour ce panneau, les rails ayant éventuellement une forme appropriée pour un mouvement louvoyant de ce panneau mobile par rapport au panneau fixe.

L'invention a également trait à un procédé de fabrication et de montage d'un tel dispositif de fermeture, selon la revendication 7.

D'autres caractéristiques et avantages de l'invention ressortiront de la description donnée ci-après des plusieurs modes de réalisation.

Il sera fait référence aux dessins annexés parmi lesquels:
- la figure 1 est une vue de face d'un premier mode de réalisation d'un dispositif proche de celui de l'invention,
- la figure 2 est une coupe selon le plan II-II de la figure 1,
- la figure 3 est une vue en coupe selon le plan III-III de la figure 1,
- la figure 4 est une vue en coupe selon le plan IV-IV de la figure 1,
- le figure 5 est une vue en coupe d'un second mode de réalisation proche de celui de l'invention,
- la figure 6 est une vue générale d'un mode de réalisation de l'invention.

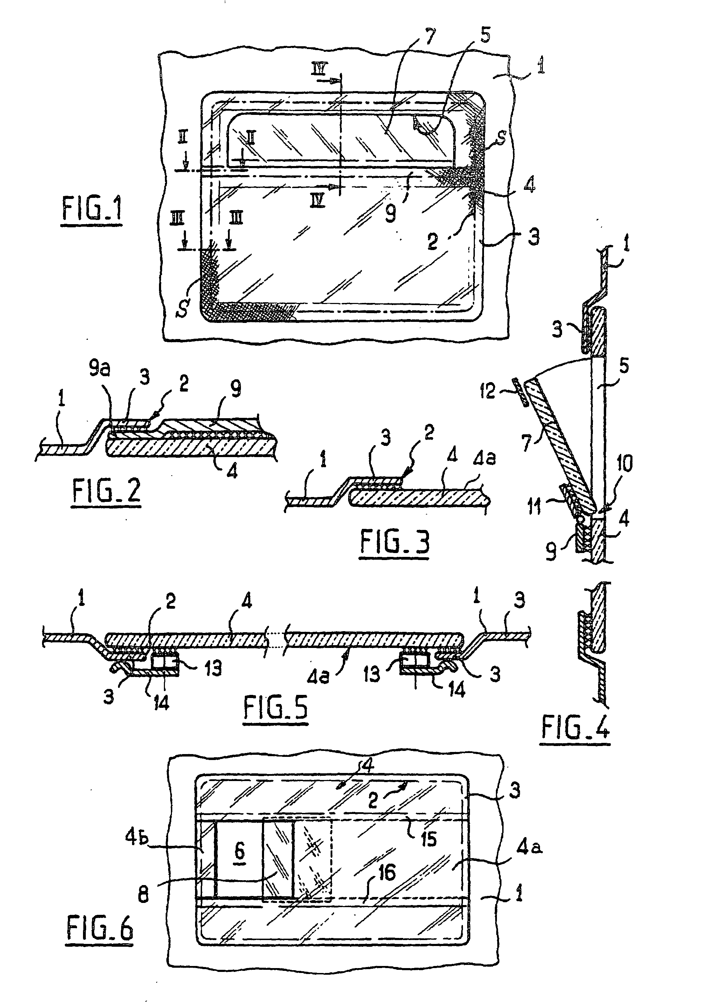

On présente sur la figure 6 une vitre à panneau mobile coulissant. Le panneau 8 destiné à obturer l'ouverture 6 ménagée dans le panneau 4 est monté coulissant entre deux traverses 15 et 16, ces traverses 15 et 16 ayant leurs extrémités pouvant être disposées comme l'extrémité 9a de la traverse 9 illustrée par la figure 2. Les traverses 15 et 16 sont ici représentées de manière simple et le panneau 8 coulisse dans un plan différent de celui du panneau 4, du côté intérieur de celui-ci.

Selon l'invention que de prévoir, les coulisses 15 et 16 sont équipées de rampes pour que le panneau 8 ait au droit de l'ouverture 6 un mouvement louvoyant permettant son placement dans le plan même du panneau 4.

Le montage d'un dispositif selon l'invention se fait de la même façon que pour le dispositif à panneau mobile basculant illustré par les figures 1 à 5.

Sur ces figures, la référence 1 correspond à un panneau de carrosserie de véhicule dans lequel on a ménagé une baie 2. Les bords de la baie sont en léger renfoncement par rapport à la surface extérieure de la carrosserie de manière à pouvoir accueillir un panneau d'obturation qui soit affleurant avec la surface extérieure du panneau 1. Ces bords portent la référence 3 sur les figures.

La fermeture de cette baie est réalisée par un panneau 4 logé dans le creux dont les bords 3 de la baie 2 forment le fond et collé par sa périphérie sur ces est collé sur le bord 3 de la baie 2. Ainsi, comme illustré dans la figure 2, chaque extrémité 9a de la traverse 9 est prise en sandwich entre ce bord 3 et ce panneau 4.

La figure 4 illustre le fait que la traverse 9 est en réalité une aile d'une charnière 10 dont l'axe de pivotement s'étend parallèlement au bord le plus long de l'ouverture 5, l'autre aile 11 de cette charnière 10 formant le support du panneau 7. En effet, le panneau 7 est rapporté par collage sur l'aile 11 dans une zone adjacente à son bord inférieur. Le bord supérieur du panneau peut comprendre une butée 12 qui coopère avec l'élément de carrosserie ou la partie supérieure du panneau 4 pour maintenir le panneau 7 en position fermée et assurer au moyen d'éléments non représentés l'étanchéité de la fermeture.

La variante de réalisation représentée à la figure 5 comporte la plupart des éléments déjà décrits avec les mêmes références. Le panneau 4 porte ici sur sa face intérieure 4a un cadre 13 qui forme une structure fermée à l'intérieur du panneau et écartée du bord périphérique de ce panneau d'une distance suffisante pour que ce panneau puisse être rapporté par collage entre les bords 3 de la baie 2. Ce cadre 13 peut constituer le support d'un certain nombre d'accessoires notamment pour la fixation du panneau sur la carrosserie au moyen par exemple de brides 14. On remarquera à la figure 1 que pour masquer les zones de collage, le panneau fixe 4 comporte des motifs sérigraphiés sur sa périphérie et au niveau de la traverse 9. Cette sérigraphie, connue en elle-même sur les vitres de véhicules, permet également de masquer des cabochons de couverture de têtes de vis ou de rivet qui pourraient être utilisés pour fixer la traverse 9 au panneau 4, aux lieux et place du collage ou en complément de celui-ci.

Enfin à la figure 6, on notera que le panneau 4 est en plusieurs parties (ici deux parties 4a et 4b qui délimitent l'ouverture 6, la partie 4a possédant trois côtés de l'ouverture et le panneau 4b le quatrième). Les panneaux sont réunis par tous moyens appropriés disposés sur la face intérieure auxquels peuvent participer un cadre et les traverses fonctionnelles de liaison du panneau mobile. Les zones de jonction des pièces formant le panneau fixe sont disposées dans des zones sérigraphiées. A cette figure, le panneau 8 destiné à obturer l'ouverture 6 ménagée est collé sur le bord 3 de la baie 2. Ainsi, comme illustré dans la figure 2, chaque extrémité 9a de la traverse 9 est prise en sandwich entre ce bord 3 et ce panneau 4.

La figure 4 illustre le fait que la traverse 9 est en réalité une aile d'une charnière 10 dont l'axe de pivotement s'étend parallèlement au bord le plus long de l'ouverture 5, l'autre aile 11 de cette charnière 10 formant le support du panneau 7. En effet, le panneau 7 est rapporté par collage sur l'aile 11 dans une zone adjacente à son bord inférieur. Le bord supérieur du panneau peut comprendre une butée 12 qui coopère avec l'élément de carrosserie ou la partie supérieure du panneau 4 pour maintenir le panneau 7 en position fermée et assurer au moyen d'éléments non représentés l'étanchéité de la fermeture.

La variante de réalisation représentée à la figure 5 comporte la plupart des éléments déjà décrits avec les mêmes références. Le panneau 4 porte ici sur sa face intérieure 4a un cadre 13 qui forme une structure fermée à l'intérieur du panneau et écartée du bord périphérique de ce panneau d'une distance suffisante pour que ce panneau puisse être rapporté par collage entre les bords 3 de la baie 2. Ce cadre 13 peut constituer le support d'un certain nombre d'accessoires notamment pour la fixation du panneau sur la carrosserie au moyen par exemple de brides 14. On remarquera à la figure 1 que pour masquer les zones de collage, le panneau fixe 4 comporte des motifs sérigraphiés sur sa périphérie et au niveau de la traverse 9. Cette sérigraphie, connue en elle-même sur les vitres de véhicules, permet également de masquer des cabochons de couverture de têtes de vis ou de rivet qui pourraient être utilisés pour fixer la traverse 9 au panneau 4, aux lieux et place du collage ou en complément de celui-ci.

Enfin à la figure 6, on notera que le panneau 4 est en plusieurs parties (ici deux parties 4a et 4b qui délimitent l'ouverture 6, la partie 4a possédant trois côtés de l'ouverture et le panneau 4b le quatrième). Les panneaux sont réunis par tous moyens appropriés disposés sur la face intérieure auxquels peuvent participer un cadre et les traverses fonctionnelles de liaison du panneau mobile. Les zones de jonction des pièces formant le panneau fixe sont disposées dans des zones sérigraphiées. De manière préférée, les panneaux 4, 7 et 8 seront des glaces, glaces qui malgré le fait qu'elles soient équipées d'éléments mobiles permettant l'aération de l'habitacle du véhicule, sont toujours affleurantes par rapport à la carrosserie de ce véhicule. L'avantage esthétique d'une telle disposition se traduit par une absence de solution de continuité, au moins visuelle entre la carrosserie et la glace.

Ce n'est pas sortir du cadre de l'invention que de prévoir des éléments du panneau 4 (lorsqu'il est en plusieurs pièces) qui ne soient pas en glace mais en une autre matière. Un panneau fixe, conformément à l'invention, doit se comprendre comme un élément monobloc qui se rapporte sur la carrosserie du véhicule, cet élément en plusieurs parties préassemblées étant porteur du panneau mobile et des éléments fonctionnels de liaison.

## Revendications

1. Dispositif de fermeture d'une baie (2) ménagée dans la carrosserie (1) d'un véhicule, comprenant un panneau fixe (4) et un panneau mobile (8) par rapport audit panneau fixe (4), monté coulissant sur deux traverses (15, 16),
lesdites traverses (15, 16) présentant des moyens ramenant ledit panneau mobile (8) dans le plan dudit panneau fixe (4), au droit d'une ouverture (6) ménagée dans ledit panneau fixe (4),
ladite ouverture (6) étant formée à distance de la périphérie dudit panneau fixe (4) et lesdites traverses (15, 16) étant éloignées de ladite périphérie dudit panneau fixe (4), de façon que ladite périphérie puisse être solidarisée aux bords de ladite baie (2) ménagée dans la carrosserie.

2. Dispositif selon la revendication 1, **caractérisé en ce que** le panneau fixe (4) est formé de plusieurs pièces (4a, 4b) possédant chacune au moins un bord délimitant un évidement fermé (6) obturable par le panneau mobile (8).

3. Dispositif selon l'une quelconque des revendications 1 et 2, **caractérisé en ce que** la face dudit panneau fixe (4) tournée vers l'intérieur du véhicule porte lesdites traverses (15, 16),
et **en ce que** ledit panneau fixe est rapporté sur ladite carrosserie par solidarisation de la périphérie de ladite face du panneau fixe (4) tournée vers l'intérieur du véhicule aux bords (3) de ladite baie (2),
de façon à assurer une continuité visuelle entre la carrosserie (1) et ledit dispositif de fermeture.

4. Dispositif selon la revendication 3, **caractérisé en ce que** les traverses (15, 16) sont rapportés par collage sur la face du panneau fixe (4) tournés vers l'intérieur du véhicule.

5. Dispositif selon l'une quelconque des revendications 1 à 4, **caractérisé en ce que** les deux traverses (15, 16) s'étendent jusqu'au bord du panneau fixe (4).

6. Dispositif selon l'une quelconque des revendications 1 à 5, **caractérisé en ce qu'**au moins une desdites traverses (15, 16) présente des prolongements jusque sous le bord dudit panneau fixe, de façon que les extrémités de ces prolongements soient prises en sandwich entre ledit panneau fixe (4) et lesdits bords (3) de ladite baie (2), de façon que ledit panneau mobile (8) soit maintenu même en cas de bris dudit panneau fixe (4).

7. Procédé de fabrication et de montage d'un dispositif de fermeture affleurant selon l'une des revendications précédentes, destiné à fermer une baie pratiquée dans la carrosserie (1) d'un véhicule, comprenant les étapes suivantes :
- obtention d'un panneau fixe (4) et d'un panneau mobile (8) ;
- montage dudit panneau mobile sur ledit panneau fixe, à l'aide de traverses (15, 16) assurant la mobilité requise, au moins une desdites traverses (15, 16),
une ouverture (6) étant formée ds le panneau fixe (4) à distance de sa périphérie et lesdites traverses (15, 16) étant éloignées de ladite périphérie dudit panneau fixe (4) ;
- montage dudit dispositif sur ladite carrosserie, par solidarisation de la périphérie de ladite face du panneau fixe tournée vers l'intérieur du véhicule aux bords (3) de ladite baie (2) en retrait de ladite carrosserie,
de façon à assurer une continuité visuelle entre la carrosserie et le dispositif de fermeture.

## Patentansprüche

1. Verschlussvorrichtung einer in der Karosserie (1) eines Fahrzeugs praktizierten Öffnung (2), mit einem feststehenden Paneel (4) und einem gegenüber diesem festen Paneel (4) bewegliches Paneel (8), das auf zwei Querschienen (15, 16) gleitend angebracht ist,
wobei diese Querschienen (15, 16) über Mittel verfügen, die das bewegliche Paneel (8) in die Ebene des feststehenden Paneels (4) zurückholen, auf der Vorderseite einer im feststehenden Paneel (4) praktizierten Öffnung (6),
wobei diese Öffnung (6) eine gewisse Entfernung zum Umfang des feststehenden Paneels (4) aufweist, und wobei die Querschienen (15, 16) von diesem Umfang des feststehenden Paneels (4) entfernt sind, so dass der besagte Umfang mit den Rändern der in der Karosserie praktizierten Öffnung (2) verbunden werden kann.

2. Vorrichtung nach Anspruch 1,
**dadurch gekennzeichnet, dass** das feststehende Paneel (4) aus mehreren Teilen (4a, 4b) gebildet ist, die jeweils mindestens einen Rand aufweisen, der eine geschlossene Aussparung (6) begrenzt, die vom beweglichen Paneel (8) verschlossen werden kann.

3. Vorrichtung nach einem der Ansprüche 1 oder 2,
**dadurch gekennzeichnet, dass** die zum Fahrzeuginneren hin gekehrte Fläche des feststehenden Paneels (4) die Querschienen (15, 16) trägt und,
dass das feststehende Paneel auf die Karosserie durch Verbindung des Umfangs der zum Fahrzeuginneren hin gekehrten Fläche des feststehenden Paneels (4) mit den Rändern (3) der Öffnung (2) aufgebracht ist,
um eine visuelle Kontinuität zwischen der Karosserie (1) und der Verschlussvorrichtung zu gewährleisten.

4. Vorrichtung nach Anspruch 3,
**dadurch gekennzeichnet, dass** die Querschienen (15, 16) durch Kleben auf der zum Fahrzeuginneren hin gekehrten Fläche des feststehenden Paneels (4) aufgebracht sind.

5. Vorrichtung nach einem der Ansprüche 1 bis 4,
**dadurch gekennzeichnet, dass** die zwei Querschienen (15, 16) sich bis zum Rand des feststehenden Paneels (4) erstrecken.

6. Vorrichtung nach einem der Ansprüche 1 bis 5,
**dadurch gekennzeichnet, dass** zumindest eine der Querschienen (15, 16) Verlängerungen bis zum Rand des feststehenden Paneels aufweist, so dass die Enden dieser Verlängerungen zwischen dem feststehenden Paneel (4) und den Rändern (3) der Öffnung (2) eingeklemmt sind, um sicherzustellen, dass das bewegliche Paneel (8) auch dann noch gehalten wird, wenn das feststehende Paneel (4) zerbrechen sollte.

7. Verfahren zur Herstellung und Montage einer bündigen Verschlussvorrichtung nach einem der vorhergehenden Ansprüche,
das eine in der Karosserie (1) eines Fahrzeugs praktizierte Öffnung schließen soll, das die folgenden Schritte umfasst:
- Erhalten eines feststehenden Paneels (4) und eines beweglichen Paneels (8);
- Montage des beweglichen Paneels auf dem feststehenden Paneel mit Hilfe von Querschienen (15, 16), welche die erforderliche Beweglichkeit mindestens einer der Querschienen (15, 16) sicherstellen,
wobei eine Öffnung (6) im feststehenden Paneel (4) mit einem Abstand zu seinem Umfang praktiziert ist, und die Querschienen (15, 16) einen bestimmten Abstand zum Umfang des feststehenden Paneels (4) aufweisen;
- Montage der Vorrichtung auf der Karosserie durch Verbindung des Umfangs der zum Fahrzeuginneren hin gekehrten Fläche des feststehenden Paneels mit den gegenüber der Fläche der Karosserie nach Innen liegenden Rändern (3) der Öffnung (2),
um eine visuelle Kontinuität zwischen der Karosserie und der Verschlussvorrichtung zu gewährleisten.

## Claims

1. Device for closure of an opening (2) provided in the bodywork (1) of a vehicle, comprising a fixed panel (4) and a panel (8) which is mobile relative to the said fixed panel (4), and is fitted such as to slide on two cross-members (15, 16),
the said cross-members (15, 16) having means which return the said mobile panel (8) onto the plane of the said fixed panel (4), at right-angles to an aperture (6) which is provided in the said fixed panel (4), the said aperture (6) being formed at a distance from the periphery of the said fixed panel (4) and the said cross-members (15, 16) being spaced from the said periphery of the said fixed panel (4), such that the said periphery can be rendered integral with the edges of the said opening (2) provided in the bodywork.

2. Device according to claim 1, **characterised in that** the fixed panel (4) is formed by a plurality of parts (4a, 4b), each of which has at least one edge which delimits a closed recess (6) which can be shut by the mobile panel (8).

3. Device according to claim 1 or claim 2, **characterised in that** the surface of the said fixed panel (4) which faces the interior of the vehicle supports the said cross-members (15, 16),
and **in that** the said fixed panel is added to the said bodywork by making the periphery of the said surface of the fixed panel (4) which faces the interior of the vehicle integral with the edges (3) of the said opening (2), such as to assure visual continuity between the bodywork (1) and the said closure device.

4. Device according to claim 3, **characterised in that** the cross-members (15, 16) are added to the surface of the fixed panel (4), which faces the interior of the vehicle, by being glued.

5. Device according to any one of claims 1 to 4, **characterised in that** the two cross-members (15, 16) extend as far as the edge of the fixed panel (4).

6. Device according to any one of claims 1 to 5, **characterised in that** at least one of the said cross-members (15, 16) has extensions which reach as far as beneath the edge of the said fixed panel, such that the ends of these extensions are sandwiched between the said fixed panel (4) and the said edges (3) of the said opening (2), such that the said mobile panel (8) is retained even if the said fixed panel (4) is broken.

7. Method for production and fitting of a flush closure device according to one of the preceding claims, which is designed to close an opening provided in the bodywork (1) of a vehicle, comprising the following steps:
- obtaining a fixed panel (4) and a mobile panel (8);
- fitting of the said mobile panel onto the said fixed panel by means of cross-members (15, 16), thus assuring the required mobility of at least one of the said cross-members (15, 16),
an opening (6) being formed in the fixed panel (4) at a distance from the periphery of the latter, and the said cross-members (15, 16) being spaced from the said periphery of the said fixed panel (4);
- fitting of the said device onto the said bodywork by making the periphery of the said surface of the fixed panel which faces the interior of the vehicle integral with the edges (3) of the said opening (2), recessed from the said bodywork,
such as to assure visual continuity between the bodywork and the closure device.
